# EUROPÄISCHE PATENTANMELDUNG

(11) **EP 4 044 551 A1**
(43) Veröffentlichungstag der Anmeldung: **17.08.2022**
(21) Anmeldenummer: 21157037.9
(22) Anmeldetag: 15.02.2021
(51) Int. Cl.: H04L 29/06

(54) **ÜBERWACHUNG EINER VERTRAUENSWÜRDIGKEIT EINER REGISTRIERUNGSSTELLE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird eine Registrierungsstelle (6) für ein Leitsystem (1) einer technischen Anlage, insbesondere eine Fertigungs- oder Prozessanlage, die dazu ausgebildet ist, einen von einer Komponente (2, 3, 4, 10) der technischen Anlage gestellten Zertifikatsantrag entgegenzunehmen, zu validieren und an eine Zertifizierungsstelle weiterzuleiten. Die Registrierungsstelle (6) ist dadurch gekennzeichnet, dass sie Mittel aufweist, um ihre Vertrauenswürdigkeit gegenüber anderen Komponenten (2, 3, 4, 10) der technischen Anlage oder gegenüber externen Komponenten nachzuweisen.

## Beschreibung

Die Erfindung betrifft eine Registrierungsstelle für ein Leitsystem einer technischen Anlage, insbesondere eine Fertigungs- oder Prozessanlage. Außerdem betrifft die Erfindung ein Leitsystem für eine technischen Anlage und die Verwendung des Leitsystems zum Betrieb einer technischen Anlage.

Eine Registrierungsstelle (engl. Registration Authority, kurz: RA) hat als eine zentrale Komponente einer Public Key Infrastruktur (PKI) einer Automatisierungsanlage insbesondere die Aufgabe, die Zertifikatsanträge (engl. Certificate Signing Requests, kurz: CSR) von diversen Anlagenkomponenten entgegenzunehmen, sie zu validieren im Falle einer erfolgreichen Validierung an eine Zertifizierungsstelle (Certification Authority oder kurz: CA) weiterzuleiten. Eine Registrierungsstelle ist daher eine Art Gateway Eine solche Registrierungsstelle ist beispielsweise in der EP 3 402 152 A1 beschrieben.

Beim Einsatz einer solchen Registrierungsstelle in einer (verfahrenstechnischen) Anlage wird sie in der Regel provisioniert, d.h. mit einem oder mehreren an die Kundenanlage gebundenen (d.h. von einer in dieser Kundenanlage eingesetzten oder online/ remote benutzten Zertifizierungsstelle ausgestellten) Zertifikat(en) samt dem zugehörigen bzw. den zugehörigen privaten Schlüssel(n) und der entsprechenden Vertrauenskette (engl. Trust Chain) einschl. des Zertifikats der Wurzelzertifizierungsstelle als des Vertrauensankers der Kundenanlage ausgestattet. Dies erfolgt entweder manuell, indem ein autorisierter Benutzer das o.g. Zertifikat bzw. die o.g. Zertifikate samt dem zugehörigen privaten Schlüssel bzw. den zugehörigen privaten Schlüsseln von der Zertifizierungsstelle ausstellen lässt und auf eine sichere Art und Weise (z.B. als ein sog. P12-Container) manuell auf der Registrierungsstelle installiert, oder (semi-) automatisiert, indem der Benutzer den von der Registrierungsstelle an die Zertifizierungsstelle automatisch übermittelten Zertifikatsantrag (beispielsweise durch die Eingabe des Benutzernamens und des Passworts) genehmigt.

Bei den o.g. Zertifikaten kann es sich z.B. in einer Anlage, in der das sog. Certificate Management Protocol (CMP) nach RFC 4210 im Einsatz ist, um ein sog. CMP Signing Certificate und ein sog. TLS Server-Zertifikat handeln. Das CMP Signing Certificate wird beispielsweise für die sog. Reprotection von den CMP-Zertifikatsanträgen der Anlagenkomponenten verwendet, während das TLS Server-Zertifikat zur Authentifizierung gegenüber den Anlagenkomponenten in der Rolle der CMP Clients auf dem Transport Layer zum Einsatz kommt.

In größeren (verfahrenstechnischen) Anlagen, die netzwerktechnisch stark segmentiert sind (sodass jedes Netzwerksegment aus Security-Sicht eine autark funktionsfähige Security-Zelle bildet), könnte sich in jedem Netzwerksegment eine dedizierte (lokale) Registrierungsstelle (die in diesem Fall als Local Registration Authority, kurz: LRA) bezeichnet wird, befinden. Alle derartige in einer verfahrenstechnischen Anlage installierten lokalen Registrierungsstellen sind entweder mit einer zentralen Registrierungsstelle oder mit einer oder mehreren Zertifizierungsstellen (Certification Authorities) verbunden. Die lokalen Registrierungsstellen nehmen die Zertifikatsanträge der Anlagenkomponenten entgegen, für die sie zuständig sind, und leiten diese - im Falle einer erfolgreichen Validierung - (in Abhängigkeit der Konfiguration) an die zuständige zentrale Registrierungsstelle oder eine Zertifizierungsstelle weiter. Ferner können auch aus Load-Balancing und/oder Redundanzgründen in einer verfahrenstechnischen Anlage mehrere lokale Registrierungsstellen betrieben werden. Beim Einsatz einer Registrierungsstelle in einer (verfahrens-)technischen Anlage wird zum aktuellen Zeitpunkt nicht geprüft, ob sie vertrauenswürdig ist. Vertrauenswürdig kann dabei zum Beispiel bedeuten, dass die Hardware der Registrierungsstelle von einem vertrauenswürdigen Hersteller kommt und / oder dass die Software der Registrierungsstelle über eine gültige Lizenz verfügt. Wäre eine Registrierungsstelle nicht vertrauenswürdig, so würde das nach dem Stand der Technik in einer (verfahrens-)technischen Anlage nicht bemerkt bzw. erkannt werden. Sie würde - wie oben beschrieben - trotzdem die für die Ausübung ihrer primären Aufgaben notwendigen (an die Kundenanlage gebundenen) Zertifikate ausgestellt bekommen und - anhand dieser Zertifikate - von den Anlagenkomponenten als vertrauenswürdig akzeptiert und hinsichtlich ihrer Vertrauenswürdigkeit nicht mehr hinterfragt werden.

Die Folge davon wäre, dass unbemerkt manipulierte Registrierungsstellen in die (verfahrens-)technische Anlage eingeschleust werden könnten, die dann in bösartiger Absicht beispielsweise fehlerhaft Zertifikate verteilen, Revokationen von Zertifikaten anstoßen oder Erneuerungen von Zertifikaten unterbinden könnten. Im schlimmsten Fall würde dadurch nicht nur der ordnungsgemäße Betrieb der (verfahrens-)technischen Anlage gestört werden, sondern die Anlage beschädigt werden. Dabei würden die Verfügbarkeit und die Integrität der Anlage (als die im Kontext der Industrial Security wichtigsten Schutzziele) verletzt werden.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Mehrzahl an Zertifizierungsstellen.

Der Erfindung liegt die Aufgabe zugrunde, ein Leitsystem für eine technische Anlage anzugeben, welches bei einer Konfigurationsänderung der technischen Anlage eine unmittelbare Anpassung der an Komponenten der technischen Anlage zu vergebenden Zertifikate ermöglicht.

Diese Aufgabe wird gelöst durch eine Registrierungsstelle für ein Leitsystem einer technischen Anlage, insbesondere eine Fertigungs- oder Prozessanlage, mit den Merkmalen des Anspruchs 1. Außerdem wird die Aufgabe gelöst durch ein Leitsystem für eine technische Anlage mit den Merkmalen des Anspruchs 5. Zudem wird die Aufgabe gelöst durch eine Verwendung eines Leitsystems gemäß Anspruch 11. Vorteilhafte Weiterbildungen ergeben sich aus den abhängigen Ansprüchen.

Ein erfindungsgemäße Registrierungsstelle für ein Leitsystem einer technischen Anlage, insbesondere eine Fertigungs- oder Prozessanlage, ist dazu ausgebildet, einen von einer Komponente der technischen Anlage gestellten Zertifikatsantrag entgegenzunehmen, zu validieren und an eine Zertifizierungsstelle weiterzuleiten. Die Registrierungsstelle ist dadurch gekennzeichnet, dass sie Mittel aufweist, um ihre Vertrauenswürdigkeit gegenüber anderen Komponenten der technischen Anlage oder gegenüber externen Komponenten nachzuweisen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der technischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Im Rahmen der vorliegenden Erfindung weist die Registrierungsstelle Mittel auf, die sie verwenden kann, um ihre Vertrauenswürdigkeit Dritten gegenüber nachzuweisen. Die Registrierungsstelle ist dabei im Kontext einer industriellen Sicherheit vertrauenswürdig, wenn sie die Funktionalitäten aufweist, die ihr Hersteller für sie vorgesehen hat. Mit anderen Worten handelt es sich bei einer vertrauenswürdigen Registrierungsstelle um eine Registrierungsstelle, die nicht in bösartiger Absicht beispielsweise fehlerhaft Zertifikate verteilt, Revokationen von Zertifikaten anstößt oder Erneuerungen von Zertifikaten unterbindet.

Solche Mittel zum Nachweis der Vertrauenswürdigkeit wurden bislang bei Registrierungsstellen für Leitsysteme technischer Anlagen nicht vorgesehen, was die im einleitenden Teil beschriebenen nachteiligen Konsequenzen mit sich bringen kann.

Durch die erfindungsgemäße Registrierungsstelle kann ein wertvoller Beitrag dazu geleistet werden, eine nicht vertrauenswürdige (z.B. manipulierte und/oder böswillige) Registrierungsstelle als eine solche erkennen und entsprechend diskriminieren zu können. Dadurch wird ein fundierter Beitrag zur Aufrechterhaltung der Systemintegrität und der Verfügbarkeit von Leitsystemen für technische Anlagen geleistet.

Im Rahmen einer vorteilhaften Weiterbildung der Erfindung weist die Registrierungsstelle als Mittel ein an eine Hardware der Registrierungsstelle gebundenes Zertifikat, insbesondere ein durch einen Hersteller der Registrierungsstelle ausgestelltes und von diesem signiertes Zertifikat, auf. Dabei ist die Registrierungsstelle dazu ausgebildet, ihre Vertrauenswürdigkeit auf Basis des Zertifikats nachzuweisen. Konkret bedeutet dies, dass die Registrierungsstelle proaktiv oder auf Anfrage durch eine Komponente der technischen Anlage das Zertifikat oder ein Verweis auf das Zertifikat (zur Verifikation durch eine Zertifizierungsstelle) an die Komponente übermitteln kann.

Bevorzugt ist das Zertifikat durch einen in der Hardware der Registrierungsstelle in einem Hardware Secure Element sicher hinterlegten privaten Schlüssel an die Hardware der Registrierungsstelle gebunden. Ein Hardware Secure Element kann dabei beispielsweise ein Trusted Platform Module (TPM) oder ein Hardware Security Module (HSM) sein.

Die Registrierungsstelle ist mit anderen Worten dazu ausgebildet, einer anderen Instanz gegenüber interaktiv nachzuweisen, dass sie über das oben genannte Zertifikat, insbesondere über das an den zugehörigen privaten Schlüssel gebundene Zertifikat, verfügt. Das Zertifikat, genauer der zugehörige, an die Hardware gebundene bzw. in dieser Hardware (z.B. in einem TPM oder einem HSM) sicher hinterlegte private Schlüssel, muss dabei nicht offenbart werden, wofür die Registrierungsstelle beispielsweise das TLS-Handshake Verfahren verwenden kann werden.

Alternativ oder zusätzlich kann die Registrierungsstelle eine an eine Software der Registrierungsstelle gebundene Lizenz aufweisen, insbesondere eine Lizenz eines Herstellers der Registrierungsstelle oder eines Betreibers der technischen Anlage. Dabei ist die Registrierungsstelle dazu ausgebildet, ihre Vertrauenswürdigkeit auf Basis der Lizenz nachzuweisen.

Unter einer "Lizenz" wird dabei eine an einen Lizenzschlüssel gebundene Erlaubnis verstanden, die es der Registrierungsstelle ermöglicht, in einer bestimmten operativen Umgebung und auf eine bestimmte Art und Weise genutzt zu werden. Dabei weist die Registrierungsstelle durch die Lizenz eine nachweisbare Bindung an ihren Hersteller (Authentizität) und einen Schutz gegen unbemerkte Manipulationen (Integrität) auf. Die Lizenz stellt daher hier einen Vertrauenswürdigkeitsnachweis für die Registrierungsstelle dar (bei einer angenommenen Vertrauenswürdigkeit des Herstellers der Registrierungsstelle) .

Die Registrierungsstelle kann auch dazu ausgebildet sein, ihre Vertrauenswürdigkeit auf Basis einer, insbesondere herstellerspezifischen, integratorspezifischen und/oder anlagenspezifischen, Konfiguration der Registrierungsstelle nachzuweisen.

Dabei können die herstellerspezifischen Konfigurationsdaten beispielsweise die vom Hersteller der Registrierungsstelle (in deren Einstellungen) voreingestellten Kommunikationsprotokolle (z.B. HTTPS im Einklang mit "Security by Default") und sogenannte "Trust Chains" von den Fertigungswerken des Herstellers (die in einem "Trust Store" der Registrierungsstelle abgelegt sein können) sein.

Die integratorspezifischen Konfigurationsdaten können beispielsweise die grundlegenden Rollen/Berechtigungen umfassen. Während in einer kleineren technischen Anlage die zwei Rollen "Administrator" und "User" ausreichend sein können, kann in einer größeren technischen Anlage eine höhere Granularität sinnvoll sein. Außerdem kann ein Integrator einer technischen Anlage ggf. gemäß dem angestrebten Security-Level/ Schutzniveau die Art und Weise der Authentifizierung festlegen/konfigurieren, z.B. "Basic Authentification" (weniger sicher) vs. "Two Factor Authentication" oder "Certificate-based Authentification" (höhere Sicherheit).

Die anlagenspezifischen Konfigurationsdaten umfassen beispielsweise diverse IP-Adressen und DNS-Namen der Registrierungsstelle sowie deren Kommunikationspartnern sowie diverse "Trust Chains" und die in der technischen Anlage für die Registrierungsstelle ausgestellten Zertifikate.

Die Aufgabe wird zudem gelöst durch ein Leitsystem für eine technische Anlage, insbesondere fertigungs- oder Prozessanlage, das eine Registrierungsstelle wie zuvor erläutert und wenigstens eine weitere Komponente umfasst, auf welcher Komponente ein Überwachungsdienst implementiert ist, der dazu ausgebildet ist, eine Verbindung mit der Registrierungsstelle herzustellen und eine Vertrauenswürdigkeit der Registrierungsstelle abzufragen.

Der Überwachungsdienst kann dazu ausgebildet sein, die Herstellung der Verbindung mit der Registrierungsstelle und die Überprüfung der Vertrauenswürdigkeit der Registrierungsstelle ereignisorientiert vorzunehmen, insbesondere bei anstehenden Erneuerungen oder bei anzustoßenden Revokationen eines Zertifikats einer Komponente der technischen Anlage.

Alternativ oder zusätzlich kann der Überwachungsdienst auch dazu ausgebildet sein, die Herstellung der Verbindung mit der Registrierungsstelle und die Überprüfung der Vertrauenswürdigkeit der Registrierungsstelle nach Ablauf einer bestimmten Zeitdauer periodisch vorzunehmen.

Der Überwachungsdienst kann dazu ausgebildet sein, für den Fall, dass die Registrierungsstelle ihre Vertrauenswürdigkeit nicht nachweisen kann, eine diesbezügliche Alarmmeldung zu erzeugen und in dem Leitsystem zu hinterlegen. Damit kann der zuständige/ berechtigte Operator oder Administrator benachrichtigt werden, damit dieser weitere Untersuchungen oder Gegenmaßnahmen einleiten kann. Bis zum Ablauf einer bestimmten Zeitdauer, oder bis zur entsprechenden Bestätigung durch einen Operator oder Wartungsingenieur, kann von einer Diskriminierung der verdächtigen Registrierungsstelle abgesehen werden. Damit verbleibt Zeit zur Überprüfung, ob die Registrierungsstelle tatsächlich korrumpiert oder dergleichen ist.

Nach dem Ablauf der bestimmten Zeitdauer (oder der Bestätigung durch einen Operator/Wartungsingenieur), innerhalb der die Registrierungsstelle ihre Vertrauenswürdigkeit nicht nachweisen kann, kann die Registrierungsstelle von dem Leitsystem für einen Betrieb in der technischen Anlage gesperrt werden.

Jeder Komponente der technischen Anlage kann mitgeteilt werden, welche Registrierungsstelle nicht vertrauenswürdig und daher zu diskriminieren ist. Dementsprechend können die Komponenten sämtliche Zertifikatshandlungen zur verdächtigen Registrierungsstelle unterbinden und alternative Registrierungsstellen nutzen. In einem weitergehenden Schritt können auch sämtliche Zertifikatshandlungen zu allen Registrierungsstellen der technischen Anlage unterbunden werden, solange eine nicht vertrauenswürdige Registrierungsstelle erkannt wird. Werden Registrierungsstellen über eine vorgegebene und nicht zu verändernde Netzwerkinfrastruktur in die technische Anlage eingebunden, kann beispielsweise auch der netzwerktechnische Zugangspunkt der Registrierungsstelle deaktiviert werden, um die verdächtige Registrierungsstelle von der übrigen Infrastruktur der technischen Anlage zu isolieren.

Die weitere Komponente kann ein Operator Station Server, ein Engineering Station Server oder ein Automatisierungsgerät sein.

Unter einem "Operator Station Server" wird vorliegend ein Server verstanden, der zentral Daten eines Bedien- und Beobachtungssystems sowie in der Regel Alarm- und Messwertarchive eines Leitsystems der technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 oder SIMATIC PCS Neo Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Automatisierungsgeräte werden zur Realisierung einer Automatisierung benutzt und können beispielsweise speicherprogrammierbare Steuerungen oder Leitsysteme sein, die eine übergeordnete Steuerungsfunktion für untergeordnete speicherprogrammierbare Steuerungen darstellt.

Die Aufgabe wird zudem gelöst durch die Verwendung eines Leitsystems wie zuvor erläutert zum Betrieb einer technischen Anlage, insbesondere einer Fertigungs- oder Prozessanlage.

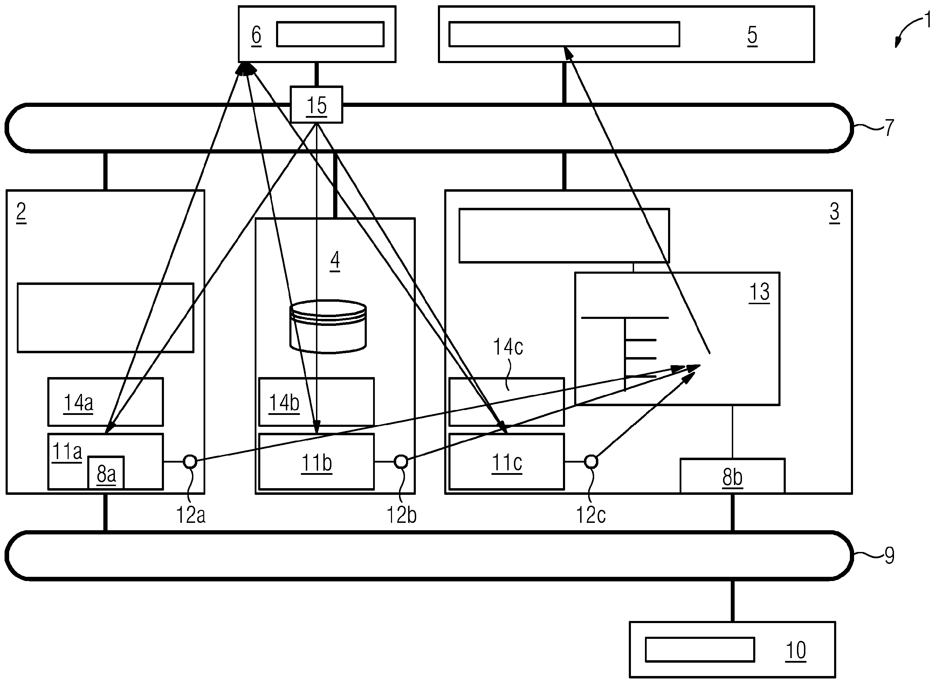

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein erfindungsgemäßes Leitsystem 1 einer als Prozessanlage ausgebildeten technischen Anlage dargestellt. Das Leitsystem 1 weist einen Engineering Station Server 2, einen Operator Station Server 3, ein Prozessdatenarchiv 4, einen Operator Station Client 5 und eine Registrierungsstelle 6 auf.

Der Engineering Station Server 2, der Operator Station Server 3, das Prozessdatenarchiv 4, der Operator Station Client 5 und die Registrierungsstelle 6 sind über einen Terminalbus 7 miteinander und optional mit nicht dargestellten weiteren Komponenten des Leitsystems 1 verbunden.

Ein Benutzer bzw. Operator kann zum Zwecke des Bedienens und Beobachtens über den Operator Station Client 5 mittels des Terminalbus 7 auf den Operator Station Server 3 zugreifen. Ein Projekteur bzw. Bediener hat mittels eines (nicht dargestellten) Engineering Station Clients mittels des Terminalbus 7 im Kontext eines Engineerings / Projektierens / Konfigurierens Zugriff auf den Engineering Station Server 2. Der Terminalbus 7 kann, ohne sich darauf zu beschränken, beispielsweise als Industrial Ethernet ausgebildet sein.

Der Engineering Station Server 2 und der Operator Station Server 3 weisen jeweils eine Schnittstelle 8a, 8b auf, die mit einem Anlagenbus 9 verbunden sind. Über diese Schnittstellen 8a, 8b kann der Engineering Station Server 2 bzw. der Operator Station Server 3 mit einem in der Figur dargestellten Automatisierungsgerät 10 sowie mit optional vorhandenen weiteren Komponenten der Prozessanlage (nicht dargestellt) kommunizieren. Der Anlagenbus 9 kann, ohne sich darauf zu beschränken, beispielsweise als Industrial Ethernet ausgebildet sein. Das Automatisierungsgerät 10 kann mit einer beliebigen Anzahl an Subsystemen (nicht dargestellt) verbunden sein.

Die Registrierungsstelle 6 weist ein durch einen Hersteller der Registrierungsstelle 6 ausgestelltes Zertifikat auf. Zudem weist die Registrierungsstelle 6 eine an eine Software der Registrierungsstelle 6 gebundene Lizenz auf, insbesondere eine Lizenz eines Herstellers der Registrierungsstelle 6 oder eines Betreibers der Prozessanlage.

Auf dem Engineering Station Server 2, auf dem Operator Station Server 3 und in dem Prozessdatenarchiv 4 ist jeweils ein Überwachungsdienst 11a, 11b, 11c implementiert. Der Überwachungsdienst 11a, 11b, 11c ist jeweils dazu ausgebildet, eine Verbindung mit der Registrierungsstelle 6 herzustellen und eine Vertrauenswürdigkeit der Registrierungsstelle 6 abzufragen.

Konnte ein Überwachungsdienst 11a, 11b, 11c eine Vertrauenswürdigkeit der Registrierungsstelle 6 nicht verifizieren, erzeugt er eine entsprechende Alarmmeldung und überträgt diese über eine jeweilige Laufzeitschnittstelle 12a, 12b, 12c an ein Prozessabbild 13, welches auf dem Operator Station Server 3 implementiert ist. Neben dem Zustand (Registrierungsstelle 6 ist nicht vertrauenswürdig) enthält die Alarmmeldung in ihren Begleitwerten auch Informationen zu der betroffenen Registrierungsstelle 6.

Die Alarmmeldung wird einem Operator der Prozessanlage in einer Meldungsanzeige auf dem Operator Station Client 5 angezeigt. Dort kann er die Alarmmeldung auch beispielsweise quittieren, um aus bestimmten Gründen von einer Sanktionierung der Registrierungsstelle 6 aufgrund deren fehlendem Nachweis einer Vertrauenswürdigkeit abzusehen.

Die Überwachungsdienste 11a, 11b, 11c werden über das Prozessabbild 13 synchronisiert und verfügen daher alle über die Informationen bezüglich möglicher diskriminierter Registrierungsstellen 6. Die Überwachungsdienste 11a, 11b, 11c können in den jeweiligen Komponenten der Prozessanlage implementierte Zertifizierungsdienste 14a, 14b, 14c davon abhalten, Zertifikatsanträge oder dergleichen an die diskriminierte Registrierungsstelle 6 zu senden.

Die Überwachungsdienst 11a, 11b, 11c, der die fehlende Vertrauenswürdigkeit der Registrierungsstelle 6 bemerkt, kann auch einen Netzwerkswitch 15, mittels dessen die Registrierungsstelle 6 mit dem Terminalbus 7 kommuniziert, deaktivieren, um die Kommunikation zu der Registrierungsstelle 6 zu unterbrechen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Registrierungsstelle (6) für ein Leitsystem (1) einer technischen Anlage, insbesondere eine Fertigungs- oder Prozessanlage, die dazu ausgebildet ist, einen von einer Komponente (2, 3, 4, 10) der technischen Anlage gestellten Zertifikatsantrag entgegenzunehmen, zu validieren und an eine Zertifizierungsstelle weiterzuleiten,
**dadurch gekennzeichnet, dass**
die Registrierungsstelle (6) Mittel aufweist, um ihre Vertrauenswürdigkeit gegenüber anderen Komponenten (2, 3, 4, 10) der technischen Anlage oder gegenüber externen Komponenten nachzuweisen.

2. Registrierungsstelle (6) nach Anspruch 1, die als Mittel ein an eine Hardware der Registrierungsstelle (6) gebundenes Zertifikat, insbesondere ein durch einen Hersteller der Registrierungsstelle ausgestelltes und von diesem signiertes Zertifikat, aufweist, und die dazu ausgebildet ist, ihre Vertrauenswürdigkeit auf Basis des Zertifikats nachzuweisen.

3. Registrierungsstelle (6) nach Anspruch 2, wobei das Zertifikat durch einen in der Hardware der Registrierungsstelle (6) in einem Hardware Secure Element sicher hinterlegten privaten Schlüssel an die Hardware der Registrierungsstelle (6= gebunden ist.

4. Registrierungsstelle (6) nach einem der vorangegangenen Ansprüche, die als Mittel eine an eine Software der Registrierungsstelle (6) gebundene Lizenz aufweist, insbesondere eine Lizenz eines Herstellers der Registrierungsstelle (6) oder eines Betreibers der technischen Anlage, und bei dem die Registrierungsstelle (6) dazu ausgebildet ist, ihre Vertrauenswürdigkeit auf Basis der Lizenz nachzuweisen.

5. Registrierungsstelle (6) nach einem der vorangegangenen Ansprüche, die als Mittel eine Konfiguration aufweist und die dazu ausgebildet ist, ihre Vertrauenswürdigkeit auf Basis der, insbesondere herstellerspezifischen, integratorspezifischen und/oder anlagenspezifischen, Konfiguration nachzuweisen.

6. Leitsystem (1) für eine technische Anlage, insbesondere fertigungs- oder Prozessanlage, das eine Registrierungsstelle (6) gemäß einem der Ansprüche 1 bis 5 und wenigstens eine weitere Komponente (2, 3, 4, 10) umfasst, auf welcher Komponente (2, 3, 4, 10) ein Überwachungsdienst (11a, 11b, 11c) implementiert ist, der dazu ausgebildet ist, eine Verbindung mit der Registrierungsstelle (6) herzustellen und eine Vertrauenswürdigkeit der Registrierungsstelle (6) abzufragen.

7. Leitsystem (1) nach Anspruch 6, bei dem der Überwachungsdienst (11a, 11b, 11c) dazu ausgebildet ist, die Herstellung der Verbindung mit der Registrierungsstelle (6) und die Überprüfung der Vertrauenswürdigkeit der Registrierungsstelle (6) ereignisorientiert vorzunehmen, insbesondere bei anstehenden Erneuerungen oder bei anzustoßenden Revokationen eines Zertifikats einer Komponente (2, 3, 4, 10) der technischen Anlage.

8. Leitsystem (1) nach Anspruch 6 oder 7, bei dem der Überwachungsdienst (11a, 11b, 11c) dazu ausgebildet ist, die Herstellung der Verbindung mit der Registrierungsstelle (6) und die Überprüfung der Vertrauenswürdigkeit der Registrierungsstelle (6) nach Ablauf einer bestimmten Zeitdauer periodisch vorzunehmen.

9. Leitsystem (1) nach einem der Ansprüche 6 bis 8, bei dem der Überwachungsdienst (11a, 11b, 11c) dazu ausgebildet ist, für den Fall, dass die Registrierungsstelle (6) ihre Vertrauenswürdigkeit nicht nachweisen kann, eine diesbezügliche Alarmmeldung zu erzeugen und in dem Leitsystem (1) zu hinterlegen.

10. Leitsystem (1) nach Anspruch 8, bei dem die Registrierungsstelle (6) nach dem Ablauf einer bestimmten Zeitdauer, innerhalb der die Registrierungsstelle (6) ihre Vertrauenswürdigkeit nicht nachweisen kann, oder durch manuelle Triggerung von dem Leitsystem (1) für einen Betrieb in der technischen Anlage gesperrt wird.

11. Leitsystem (1) nach einem der Ansprüche 6 bis 10, wobei die weitere Komponente ein Operator Station Server (3), ein Engineering Station Server (2) oder ein Automatisierungsgerät (10) ist.

12. Verwendung eines Leitsystems (1) nach einem der Ansprüche 6 bis 11 zum Betrieb einer technischen Anlage, insbesondere einer Fertigungs- oder Prozessanlage.
